# EUROPEAN PATENT SPECIFICATION

(11) **EP 0 404 435 B1**
(45) Date of publication and mention of the grant of the patent: **18.09.1996**
(21) Application number: 90306480.6
(22) Date of filing: 14.06.1990
(51) Int. Cl.: C03C 8/24, H01M 2/08, C03C 3/091

(54) **Glass-metal seals**
Glas-Metalldichtungen und ihre Anwendung
Joints étanches de verre-métal et leur utilisation

(30) Priority: 15.06.1989 US 366430
(43) Date of publication of application: 27.12.1990
(73) Proprietor: MEDTRONIC, INC., Minneapolis, Minnesota 55432-3576 (US)
(72) Inventor: Taylor, William John, Anoka, Minnesota 55303 (US); Lessar, Joseph F., Coon Rapids, Minnesota 55433 (US); Weiss, Douglas J., Plymouth, Minnesota 55441 (US)
(74) Representative: Cockbain, Julian, Dr.

(56) References cited:
- EP-A- 0 262 073
- GB-A- 2 056 753
- US-A- 3 802 875
- CHEMICAL ABSTRACTS Vol. 88, No. 10, 6 March 1987, page 171, abstract No. 65021u, Columbus, Ohio, US: A.I. Kuznetsov et al. "Study of heterophase interaction of glass S 65-1 during sealing with titanium and iron nickel group" & Izv. Vyssh. Uchebn. Zaved., Khim. Khim. Technol. 1977, vol. 20, No. 8, pages 1192-1195
- CHEMICAL ABSTRACTS vol. 99, No. 10, 19 September 1983, page 281, abstract No. 75490n, Columbus, Ohio, US; B.V. Cheblukova et al.: "Tellurium-containing glasses for joints with metals" and Fiz.-Khim. Tekhnol. Stekla Sitallov 1981, pages 97-100
- N.T.I.S. TECHNICAL NOTES No. 7, part C, July 1983, NTN 83-0458, Springfield, Virginia, US; "Glass for sealing lithium cells"
- EXTENDED ABSTRACTS FALL MEETING vol. 87-2, 18-23 October 1987, page 41, Honolulu, Hawaii; S.C. Levy: "Reliability of Li/So2 Cells for Long Life Applications"
- MEDIZINTECHNIK vol. 24, No. 1, March 1984, pages 13-17, Berlin, DDR; W. Niemayer et al.: "Konfektionierung implantierbarer Herzschrittmacher"
- "CRC HANDBOOK OF CHEMISTRY AND PHYSICS" 70th edition, page F137, 1989-90, CRC Press, Boca Raton, US

## Description

This invention relates to glass-metal seals and metal-glass-metal seals, such as those in electrical feedthroughs, commonly incorporated into electrochemical cells of non-aqueous types, such as Li/SO₂, SOCl₂, MnO₂ and organic electrolyte batteries and implantable pulse generators, such as heart pacemakers and other such medical devices. It is, however, broadly applicable to any sealed device requiring a feedthrough structure. For example, devices used in aerospace applications may require the improved feedthroughs of this invention. Such devices require seals which are hermetic and/or moisture resistant (for example as to bodily fluids) and/or corrosion resistant. Such devices typically make use of a titanium or titanium alloy container into which an electrical inlet lead, including related feedthrough structure, is incorporated. In its most simple configurations, the sealed inlet arrangement may merely comprise an electrical pin or lead surrounded by the glass and sealed thereto, the glass being positioned within an opening in the container and sealed directly thereto as well (a header arrangement). A titanium surround may be used around an opening when the container is of another material. Other configurations may involve a titanium or titanium alloy sleeve which holds the glass and electrical pin. The sleeve is typically welded into the opening in the device container.

We have now found that particularly effective glass to titanium or titanium alloy seals may be produced using boroaluminasilicate glasses, that is glasses derived from oxides of boron, silicon and aluminium. Such boroaluminasilicate glasses may of course comprise further minor components (that is as less than 11% by weight of the overall glass composition) such as other metal oxides, e.g. those of calcium, magnesium or transition metals.

Viewed from one aspect therefore the invention provides the use of a boroaluminasilicate glass composition as a sealant for bonding to titanium or a titanium alloy, characterised in that said glass comprises less than 50% by weight silica, 12 to 30% by weight boric oxide, 13 to 20% by weight alumina, 6 to 11% by weight magnesium oxide, 1 to 11% by weight calcium oxide, up to 6% by weight strontium oxide, up to 3% by weight lanthanum oxide and up to 1% by weight cobalt oxide.

Viewed from a further aspect the invention also provides a device incorporating a glass-metal seal wherein said metal is titanium or an alloy thereof and said glass is a boroaluminasilicate glass, characterised in that said glass comprises less than 50% by weight silica, 12 to 30% by weight boric oxide, 13 to 20% by weight alumina, 6 to 11% by weight magnesium oxide, 1 to 11% by weight calcium oxide, up to 6% by weight strontium oxide, up to 3% by weight lanthanum oxide and up to 1% by weight cobalt oxide.

Viewed from another aspect the invention also provides an electrical device comprises an electrical lead extending through a feedthrough which comprises a body of a boroaluminasilicate glass sealingly contacting a titanium or titanium alloy surface, and wherein said glass comprises less than 50% by weight silica, 12 to 30% by weight boric oxide, 13 to 20% by weight alumina, 6 to 11% by weight magnesium oxide, 1 to 11% by weight calcium oxide, up to 6% by weight strontium oxide, up to 3% by weight lanthanum oxide and up to 1% by weight cobalt oxide.

In one particular embodiment, the electrical device of the invention is an implantable device. It may also comprise a container with an external electrical lead extending thereinto through the improved feedthrough structure, the structure comprising a body of boroaluminasilicate glass sealed to a titanium or titanium alloy surround positioned about an opening in the container and with the lead extending through the glass.

In a further particular embodiment the device of the invention is an electrochemical cell comprising a cell container having a feedthrough opening therein, an electrical lead extending through said opening, and a boroaluminasilicate glass insulator sealingly surrounding said lead and sealingly contacting a titanium or titanium alloy surface extending around said opening.

In such cells, the body of boroaluminasilicate glass serves to provide a hermetic, moisture resistant seal in the opening in the cell container.

The boroaluminasilicate glass used according to the invention derives majoratively from oxides of boron, aluminium and silicon but may advantageously comprise oxides of other metals such as transition metals and group IIa metals as minor components (less than 11% by weight). Particularly conveniently the boraluminasilicate glass derives from a composition consisting essentially of the following components or equivalent:

| | |
|---|---|
| SiO₂ | 43 to 46% by weight |
| B₂O₃ | 12 to 30% by weight |
| Al₂O₃ | 13 to 20% by weight |
| MgO | 6 to 11% by weight |
| CaO | 1 to 11% by weight |
| SrO | 0 to 6% by weight |
| La₂O₃ | 0 to 3% by weight and |
| CoO | 0 to 1% by weight. |

However the boraluminasilicate glass used according to the invention particularly preferably comprises Pemco 1409P type glass (as manufactured by the Pemco Products Group of Mobay Chemical Corporation, a division of Bayer USA, Inc., Baltimore, Maryland, USA). It has been found that this glass readily seals to titanium and its alloys. To increase its corrosion resistance, which is desirable in many instances, the Pemco 1409P glass composition may advantageously be modified by blending it with other components, especially alumina-silicate glasses (that is glasses composed oxides of aluminium and silicon, but which may contain other components). Particularly preferably the Pemco 1409P composition may be modified by blending with various amounts of an alumina-silicate glass known in the art as TA-23. TA-23 glass is manufactured by various sources to composition standards originally established by Sandia.

However, when seals using such glass compositions are formed, the glass may show a tendency to attach to the fixturing. This problem may be addressed according to the invention by incorporating a barrier element of ceramic or high temperature glass into the seal structure. This preferably is disposed adjacent a portion of the glass seal that would otherwise have contacted the fixture during fabrication and desirably it should have a substantially matching thermal expansion coefficient.

Preferred embodiments of the invention will now be described further by way of example and with reference to the accompanying drawings, in which:
Figs. 1 and 2 represent in partial and schematic form devices according to the invention having a titanium or titanium alloy container and a seal arrangement according to the invention; and
Fig. 3 represents in partial and schematic form a graphite fixture in which a seal arrangement according to the invention including a barrier element is formed.

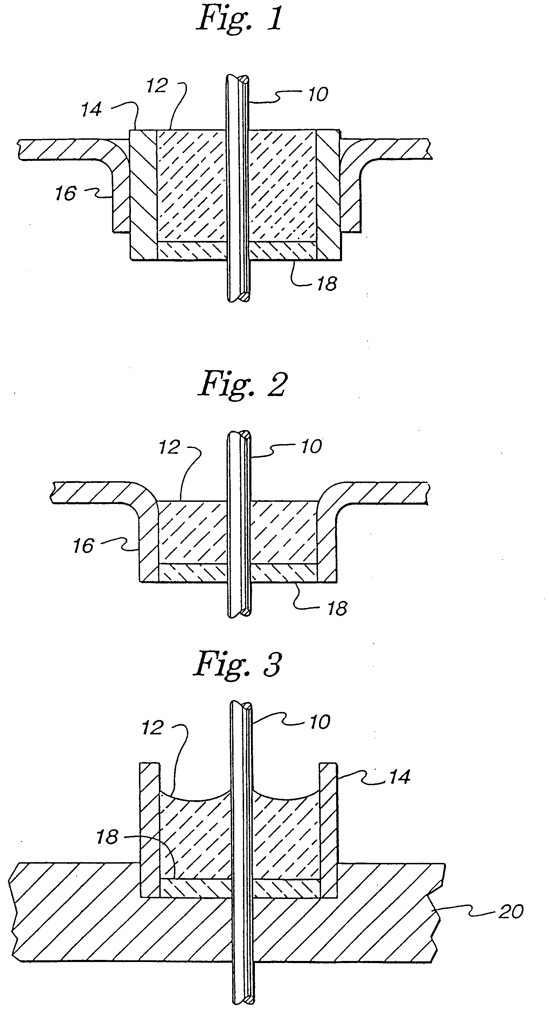

Referring to Fig. 1, a device according to the invention incorporating a glass-metal seal in the form of a feedthrough, is shown. It includes an electrical lead pin 10 sealed to a body of insulating glass 12 held in a titanium or titanium alloy sleeve or ferrule 14 which is welded or otherwise sealed directly into a container 16 of a device of any of the aforementioned types. Titanium alloys such as Ti - 6Al - 4V, Ti - 5Al-2.5 Sn or Ti-6Al -2cb - 1 Ta - 1Mo may be used for sleeve 14. In general, where a titanium alloy is used it should be one which does not exhibit or can be made to limit alpha/beta grain growth changes at the glass fusing temperatures of about 1000°C. The term "titanium" is used hereinafter to include titanium and its alloys.

Typically, pin 10 (or multiple pins 10 - not shown) will be selected from: tantalum, niobium, molybdenum, tungsten, Kovar (for composition of Kovar see CRC Handbook of Chemistry and Physics, 70th Edition, page F137) or an alloy thereof. If desired, the sleeve may be omitted and, in cases where the container is titanium or a titanium alloy, the glass may be sealed directly to it as shown in Fig. 2 in a typical "header" arrangement. A barrier element 18 may be included as well. It is described further hereinbelow. Glass insulator 12 is made into a preform body and then sealed to pin 10 and to sleeve 14, or to the container as already noted, by fusing it in a tooling fixture. Glass 12 is of the Pemco 1409P type, having the following nominal composition or equivalent

| Wt % | | | | |
|---|---|---|---|---|
| SiO₂ | B₂O₃ | Al₂O₃ | MgO | CaO |
| 44 | 29 | 14.4 | 10.2 | 2.2 |

This type of composition has been found to seal readily to titanium or titanium alloys.

To improve further the corrosion or moisture resistance of the glass body 12, the Pemco type composition may be blended with a type of alumina-silicate glass as developed by Sandia National Laboratories and known as TA-23 or equivalent, having the nominal composition:

| Wt % | | | | | | | |
|---|---|---|---|---|---|---|---|
| SiO₂ | B₂O₃ | Al₂O₃ | MgO | CaO | SrO | La₂O₃ | CoO |
| 44.95 | 8.0 | 20.0 | 7.0 | 12.0 | 6.0 | 2.0 | 0.05 |

Such blended compositions are made into a preform and fused for sealing as already described.

Various blends of the two foregoing glass compositions may be used ranging in wt% from about 10% to about 80% TA-23, balance Pemco 1409P blend. A 50%/50% blend is preferred, most preferred is a 70% - 80% TA-23, balance Pemco 1409P blend. Sealing glass 12 may also be initially prepared as a discrete overall composition in which the oxide ratios as expressed above are represented.

Manufacturing seals and feedthroughs with these glass compositions is oftentimes difficult because of reaction of the glass to the fixturing. It is typical to make fixturing out of graphite working parts which, in the presence of vapours from titanium and its alloys, causes the glass to attach to the fixturing. Such a fixture is shown schematically in Fig. 3.

In its most preferred form, a glass-metal seal of the invention will include a ceramic or glass barrier element 18 in the feedthrough structure, which is placed between the glass and the fixture 20, as shown in Fig. 3. It is compatible as to thermal and chemical stability with the glass insulator 12. Mullite ceramic or MP30 high temperature glass are preferred materials for barrier 18. The latter is a proprietary glass composition of a company identified as Electro-Glass Products of Mammoth, Pennsylvania, USA.

The fixture, with parts arranged as shown in Fig. 3 is placed in an oven and heated to fuse glass 12 to a melting temperature thereby forming a seal with all contacting parts upon cooling. Barrier element 18 being resistant to such temperatures retains its shape and settles into the glass 12.

The specific materials described herein for use with the various structural elements of a feedthrough (lead, pin or the like, glass and surrounding header, sleeve or the like) when used in combination provide compatible thermal expansion characteristics overall having unique advantage.

This completes the description of the preferred and alternate embodiments of the invention. Those skilled in the art may recognize other equivalents to the specific embodiments described herein, which equivalents are intended to be encompassed by the claims attached hereto.

## Claims

1. The use of a boroaluminasilicate glass composition as a sealant for bonding to titanium or an alloy thereof, characterised in that said glass composition comprises less than 50% by weight silica, 12 to 30% by weight boric oxide, 13 to 20% by weight alumina, 6 to 11% by weight magnesium oxide, 1 to 11% by weight calcium oxide, up to 6% by weight strontium oxide, up to 3% by weight lanthanum oxide and up to 1% by weight cobalt oxide.

2. A device incorporating a glass-metal seal wherein said metal (14) is titanium or an alloy thereof and said glass (12) is a boroaluminasilicate glass characterised in that said glass comprises less than 50% by weight silica, 12 to 30% by weight boric oxide, 13 to 20% by weight alumina, 6 to 11% by weight magnesium oxide, 1 to 11% by weight calcium oxide, up to 6% by weight strontium oxide, up to 3% by weight lanthanum oxide and up to 1% by weight cobalt oxide.

3. An electrical device comprising an electrical lead (10) extending through a feedthrough (12,14,18) which comprises a body (12) of boroaluminasilicate glass sealing contacting a titanium or titanium alloy (14) surface, and wherein said glass comprises less than 50% by weight silica, 12 to 30% by weight boric oxide, 13 to 20% by weight alumina, 6 to 11% by weight magnesium oxide, 1 to 11% by weight calcium oxide, up to 6% by weight strontium oxide, up to 3% by weight lanthanum oxide and up to 1% by weight cobalt oxide.

4. A device as claimed in claim 3 wherein said lead is of a material selected from tantalum, niobium, molybdenum, tungsten, Kovar and alloys thereof.

5. A device as claimed in either of claims 3 and 4 comprising an electrochemical cell comprising a cell container having a feedthrough opening therein, an electrical lead (10) extending through said opening and a boroaluminasilicate glass insulator (12) sealingly surrounding said lead and sealingly contacting a titanium or titanium alloy (14) surface extending around said opening.

6. A device as claimed in claim 5 being an electrochemical cell the cell chemistry whereof is based on SOCl₂.

7. A device as claimed in claim 5 being an electrochemical cell the cell chemistry whereof is based on lithium and an organic electrolyte.

8. A device as claimed in claim 5 being an electrochemical cell the cell chemistry whereof incorporates a lithium element.

9. A device as claimed in any one of claims 2 to 8 wherein the overall composition from which said boroaluminasilicate glass comprises the following:
| | |
|---|---|
| SiO₂ | about 44%, |
| B₂O₃ | about 29%, |
| Al₂O₃ | about 14.4%, |
| MgO | about 10.2%, and |
| CaO | about 2.2% by weight. |

10. A device as claimed in any one of claims 2 to 8 wherein said glass derives from a first composition as defined in claim 5 blended with a second composition comprising the following:
| | |
|---|---|
| SiO₂ | about 44.95%, |
| B₂O₃ | about 8.0%, |
| Al₂O₃ | about 20.0%, |
| MgO | about 7.0%, |
| CaO | about 12.0%, |
| SrO | about 6.0%, |
| La₂O₃ | about 2.0%, and |
| CoO | about 0.05% by weight. |

11. A device as claimed in claim 10 wherein said glass derives from a blend comprising 10 to 80% by weight of said second composition, with the balance consisting essentially of said first composition.

12. A device as claimed in claim 11 wherein said glass derives from a blend comprising 70 to 80% by weight of said second composition.

13. A device as claimed in claim 11 wherein said glass derives from a blend comprising about 50% by weight of said second composition.

14. A device as claimed in any one of claims 2 to 13 further including adjacent a portion of said glass (12) a glass or ceramic barrier member (18).

15. A device as claimed in claim 14 wherein said barrier member (18) is of mullite glass.

16. A device as claimed in any one of claims 2 to 15 wherein said titanium or titanium alloy (14) surface is provided by a sleeve (14) disposed within an opening in a wall of said device.

17. A device as claimed in any one of claims 2 to 15 wherein said titanium or titanium alloy (14) surface is provided by a surround (14) disposed about an opening in a wall of said device.

18. A device as claimed in either one of claims 16 and 17 wherein said opening is in the wall of a container.

19. A device as claimed in either one of claims 5 and 18 wherein said container is of titanium or a titanium alloy.

20. A device as claimed in any one of claims 2 to 19 being an implantable device.

## Patentansprüche

1. Verwendung einer Boraluminiumoxidsilicatglas-Zusammensetzung als Dichtmasse zum Verbinden mit Titan oder einer Titanlegierung, dadurch **gekennzeichnet**, daß die Glaszusammensetzung weniger als 50 Gew.-% Siliciumoxid, 12 bis 30 Gew.-% Boroxid, 13 bis 20 Gew.-% Aluminiumoxid, 6 bis 11 Gew.-% Magnesiumoxid, 1 bis 11 Gew.-% Calciumoxid, bis zu 6 Gew.-% Strontiumoxid, bis zu 3 Gew.-% Lanthanoxid und bis zu 1 Gew.-% Cobaltoxid enthält.

2. Vorrichtung, die eine Glas/Metall-Dichtung aufweist, wobei das Metall (14) Titan oder eine Titanlegierung und das Glas (12) ein Boraluminiumoxidsilicatglas ist, dadurch **gekennzeichnet**, daß das Glas weniger als 50 Gew.-% Siliciumoxid, 12 bis 30 Gew.-% Boroxid, 13 bis 20 Gew.-% Aluminiumoxid, 6 bis 11 Gew.-% Magnesiumoxid, 1 bis 11 Gew.-% Calciumoxid, bis zu 6 Gew.-% Strontiumoxid, bis zu 3 Gew.-% Lanthanoxid und bis zu 1 Gew.-% Cobaltoxid enthält.

3. Elektrische Vorrichtung mit einer eine Durchführung (12, 14, 18) durchsetzenden elektrischen Leitung (10), wobei die Durchführung einen eine Fläche (14) aus Titan oder einer Titanlegierung dichtend berührenden Körper (12) aus Boraluminiumoxidsilicatglas aufweist und wobei das Glas weniger als 50 Gew.-% Siliciumoxid, 12 bis 30 Gew.-% Boroxid, 13 bis 20 Gew.-% Aluminiumoxid, 6 bis 11 Gew.-% Magnesiumoxid, 1 bis 11 Gew.-% Calciumoxid, bis zu 6 Gew.-% Strontiumoxid, bis zu 3 Gew.-% Lanthanoxid und bis 1 Gew.-% Cobaltoxid enthält.

4. Vorrichtung nach Anspruch 3, wobei die Leitung aus einem aus Tantal, Niob, Molybdän, Wolfram, Kovar und deren Legierungen ausgewählten Material besteht.

5. Vorrichtung nach Anspruch 3 oder 4 mit einer elektrochemischen Zelle, die einen Zellenbehälter mit einer Durchführungsöffnung, einer diese durchsetzenden elektrischen Leitung (10) und einem Boraluminiumoxidsilicatglas-Isolator (12) enthält, der die Leitung dichtend umschließt und eine die Öffnung umgebende Fläche (14) aus Titan oder einer Titanlegierung dichtend berührt.

6. Vorrichtung nach Anspruch 5, die eine elektrochemische Zelle mit auf SOCl₂ basierender Zellenchemie ist.

7. Vorrichtung nach Anspruch 5, die eine elektrochemische Zelle mit auf Lithium und einen organischen Elektrolyt basierender Zellenchemie ist.

8. Vorrichtung nach Anspruch 5, die eine elektrochemische Zelle mit ein Lithiumelement enthaltender Zellenchemie ist.

9. Vorrichtung nach einem der Ansprüche 2 bis 8, wobei die Gesamtzusammensetzung des Boraluminiumoxidsilicatglases enthält:
| | |
|---|---|
| SiO₂ | etwa 44 Gew.-%, |
| B₂O₃ | etwa 29 Gew.-%, |
| Al₂O₃ | etwa 14,4 Gew.-%, |
| MgO | etwa 10,2 Gew.-% und |
| CaO | etwa 2,2 Gew.-%. |

10. Vorrichtung nach einem der Ansprüche 2 bis 8, wobei sich das Glas aus einer in Anspruch 5 definierten und mit einer zweiten Zusammensetzung gemischten ersten Zusammensetzung herleitet, wobei die zweite Zusammensetzung enthält:
| | |
|---|---|
| SiO₂ | etwa 44,95 Gew.-%, |
| B₂O₃ | etwa 8,0 Gew.-%, |
| Al₂O₃ | etwa 20,0 Gew.-%, |
| MgO | etwa 7,0 Gew.-%, |
| CaO | etwa 12,0 Gew.-%, |
| SrO | etwa 6,0 Gew.-%, |
| La₂O₃ | etwa 2,0 Gew.-% und |
| CoO | etwa 0,05 Gew.-%. |

11. Vorrichtung nach Anspruch 10, wobei sich das Glas aus einer Mischung herleitet, die 10 bis 80 Gew.-% der zweiten Zusammensetzung aufweist und deren Rest im wesentlichen aus der ersten Zusammensetzung besteht.

12. Vorrichtung nach Anspruch 11, wobei sich das Glas aus einer Mischung herleitet, die 70 bis 80 Gew.-% der zweiten Zusammensetzung enthält.

13. Vorrichtung nach Anspruch 11, wobei sich das Glas aus einer Mischung herleitet, die etwa 50 Gew.-% der zweiten Zusammensetzung enthält.

14. Vorrichtung nach einem der Ansprüche 2 bis 13 mit einem an einen Teil des Glases (12) angrenzenden Glas- oder Keramik-Begrenzungselement (18).

15. Vorrichtung nach Anspruch 14, wobei das Begrenzungselement (18) aus Mullit-Glas besteht.

16. Vorrichtung nach einem der Ansprüche 2 bis 15, wobei die Fläche (14) aus Titan oder einer Titanlegierung von einer innerhalb einer Öffnung in einer Wand der Vorrichtung angeordnete Buchse (14) gebildet ist.

17. Vorrichtung nach einem der Ansprüche 2 bis 15, wobei die Fläche (14) aus Titan oder einer Titanlegierung von einer eine Öffnung in einer Wand der Vorrichtung umgebenden Einfassung (14) gebildet ist.

18. Vorrichtung nach einem der Ansprüche 16 und 17, wobei die Öffnung in der Wand eines Behälters vorhanden ist.

19. Vorrichtung nach einem der Ansprüche 5 und 18, wobei der Behälter aus Titan oder einer Titanlegierung besteht.

20. Vorrichtung nach einem der Ansprüche 2 bis 19, die eine implantierbare Vorrichtung ist.

## Revendications

1. Utilisation d'une composition de verre de boroaluminesilicate en tant que matériau d'étanchéité pour une liaison à du titane ou à un alliage de celui-ci, caractérisée en ce que ladite composition de verre comprend moins de 50% en poids de silice, de 12 à 30% en poids d'oxyde de bore, de 13 à 20% en poids d'oxyde d'aluminium, de 6 à 11% en poids d'oxyde de magnésium, de 1 à 11% en poids d'oxyde de calcium, jusqu'à 6% en poids d'oxyde de strontium, jusqu'à 3% en poids d'oxyde de lanthane et jusqu'à 1% en poids d'oxyde de cobalt.

2. Dispositif comportant un joint de verre-métal, dans lequel ledit métal (14) est du titane ou un alliage de celui-ci, et ledit verre (12) est un verre de boroaluminesilicate, caractérisé en ce que ledit verre comprend moins de 50% en poids de silice, de 12 à 30% en poids d'oxyde de bore, de 13 à 20% en poids d'oxyde d'aluminium, de 6 à 11% en poids d'oxyde de magnésium, de 1 à 11% en poids d'oxyde de calcium, jusqu'à 6% en poids d'oxyde de strontium, jusqu'à 3% en poids d'oxyde de lanthane et jusqu'à 1% en poids d'oxyde de cobalt.

3. Dispositif électrique comprenant un conducteur électrique (10) s'étendant à travers une traversée (12, 14, 18) qui comprend un corps (12) de verre de boroaluminesilicate en contact étanche avec une surface de titane ou d'alliage de titane (14), et dans lequel ledit verre comprend moins de 50% en poids de silice, de 12 à 30% en poids d'oxyde de bore, de 13 à 20% en poids d'oxyde d'aluminium, de 6 à 11% en poids d'oxyde de magnésium, de 1 à 11% en poids d'oxyde de calcium, jusqu'à 6% en poids d'oxyde de strontium, jusqu'à 3% en poids d'oxyde de lanthane et jusqu'à 1% en poids d'oxyde de cobalt.

4. Dispositif selon la revendication 3, dans lequel ledit conducteur est fait d'un matériau choisi parmi le tantale, le niobium, le molybdène, le tungstène, le Kovar et des alliages de ceux-ci.

5. Dispositif selon l'une quelconque des revendications 3 et 4, comprenant une cellule électrochimique comprenant un conteneur de cellule ayant une ouverture de traversée dans celui-ci, un conducteur électrique (10) s'étendant à travers ladite ouverture, et un isolant (12) en verre de boroaluminesilicate entourant de façon étanche ledit conducteur, et venant en contact de façon étanche avec une surface de titane ou d'alliage de titane (14) s'étendant autour de ladite ouverture.

6. Dispositif selon la revendication 5, étant une cellule électrochimique dont la chimie de cellule est basée sur du SOCl₂.

7. Dispositif selon la revendication 5, étant une cellule électrochimique dont la chimie de cellule est basée sur du lithium et un électrolyte organique.

8. Dispositif selon la revendication 5, étant une cellule électrochimique dont la chimie de cellule comporte un élément en lithium.

9. Dispositif selon l'une quelconque des revendications 2 à 8, dans lequel la composition globale dudit verre de boroaluminesilicate comprend ce qui suit:
| | |
|---|---|
| SiO₂ | environ 44%, |
| B₂O₃ | environ 29%, |
| Al₂O₃ | environ 14,4%, |
| MgO | environ 10,2%, et |
| CaO | environ 2,2% en poids. |

10. Dispositif selon l'une quelconque des revendications 2 à 8, dans lequel ledit verre provient d'une première composition telle que définie dans la revendication 5, mélangée avec une deuxième composition comprenant ce qui suit:
| | |
|---|---|
| SiO₂ | environ 44,95%, |
| B₂O₃ | environ 8,0%, |
| Al₂O₃ | environ 20,0%, |
| MgO | environ 7,0%, |
| CaO | environ 12,0%, |
| SrO | environ 6,0%, |
| La₂O₃ | environ 2,0%, et |
| CoO | environ 0,05% en poids. |

11. Dispositif selon la revendication 10, dans lequel ledit verre provient d'un mélange comprenant de 10 à 80% en poids de ladite deuxième composition, l'équilibre étant essentiellement constitué de ladite première composition.

12. Dispositif selon la revendication 11, dans lequel ledit verre provient d'un mélange comprenant de 70 à 80% en poids de ladite deuxième composition.

13. Dispositif selon la revendication 11, dans lequel ledit verre provient d'un mélange comprenant 50% en poids environ de ladite deuxième composition.

14. Dispositif selon l'une quelconque des revendications 2 à 13, comportant en outre à côté d'une partie dudit verre (12), un organe de barrage en verre ou en céramique (18).

15. Dispositif selon la revendication 14, dans lequel ledit organe de barrage (18) est en verre mullite.

16. Dispositif selon l'une quelconque des revendications 2 à 15, dans lequel la surface dudit titane ou alliage de titane (14) est pourvue d'un manchon (14) disposé à l'intérieur d'une ouverture située dans une paroi dudit dispositif.

17. Dispositif selon l'une quelconque des revendications 2 à 15, dans lequel la surface dudit titane ou alliage de titane (14) est pourvue d'un encadrement (14) disposé autour d'une ouverture située dans une paroi dudit dispositif.

18. Dispositif selon l'une ou l'autre des revendications 16 et 17, dans lequel ladite ouverture se trouve dans la paroi d'un conteneur.

19. Dispositif selon l'une ou l'autre des revendications 5 et 18, dans lequel ledit conteneur est fait de titane ou d'un alliage de titane.

20. Dispositif selon l'une quelconque des revendications 2 à 19, étant un dispositif implantable.
